# EUROPEAN PATENT APPLICATION

(11) **EP 3 173 009 A1**
(43) Date of publication of application: **31.05.2017**
(21) Application number: 15382584.9
(22) Date of filing: 24.11.2015
(51) Int. Cl.: A47L 15/48, D06F 58/20, A47L 15/42, D06F 58/24

(54) **HOUSEHOLD APPLIANCE WITH A HEAT PUMP AND METHOD FOR OPERATING A HOUSEHOLD APPLIANCE**

(71) Applicant: BSH Hausgeräte GmbH, 81739 München (DE); BSH Electrodomésticos España, S.A., 50197 Zaragoza (ES)
(72) Inventor: San Martin Sancho, Roberto, 31200 Estella (ES); Schneider, Thomas, 13467 Berlin (DE); Capablo Sese, Joaquin Jesus, 50003 Zaragoza (ES); Schliecker, Gudrun, 10967 Berlin (DE)

(57) **Abstract**

The invention relates to a household appliance (1) with a heat pump (2) comprising a first heat exchanger (3) arranged within an air duct (18) of the household appliance (1) and a second heat exchanger (4). The heat pump (2) comprises means (7) for reversing a flow direction of a refrigerant through the heat pump (2). The household appliance (1) comprises means for supplying water to the second heat exchanger (4) which is configured to transfer heat from the refrigerant to the water in a first operation mode of the heat pump (2), in which the second heat exchanger (4) is operated as a condenser. The second heat exchanger (4) is also configured to transfer heat from the water to the refrigerant in a second operation mode of the heat pump (2), in which the second heat exchanger (4) is operated as an evaporator. The invention further relates to a method for operating such a household appliance (1).

## Description

The invention relates to a household appliance with a reversible heat pump. The invention further relates to a method for operating such a household appliance.

Documents EP 2 466 001 A1 und EP 2 497 856 A1 each describe a machine for laundry drying for domestic use with a reversible heat pump. Herein the heat pump comprises a four-way-valve which allows to utilize a first heat exchanger as condenser for heating air introduced into a drum of the dryer and a second heat exchanger as an evaporator. Switching the four-way-valve allows to utilize the first heat exchanger as evaporator and the second heat exchanger as the condenser. In a first switching state of the four-way-valve the hot, humid air leaving the drum of the dryer passes across the evaporator and is dehumidified. In a reversed operation mode of the heat pump, in which the first heat exchanger is operated as evaporator, cool air is introduced into the drum for refreshing the dry laundry.

Moreover, document JP 2008 136484 A describes a laundry dryer with a heat pump.

A household appliance configured as washer-dryer has the general advantage of saving space since the washer-dryer incorporates the washing function and the drying function in the same appliance. Different types of washer-dryers can be differentiated.

In a first type the drying takes place by evacuating hot, wet air to the room in which the washer-dryer is placed or outdoors. Herein the drying of the wet laundry contained in the washer-dryer takes place by applying a heated air current blown by a fan. This air current provokes the extraction of humidity contained in the laundry when flowing through the laundry. The air applied to the laundry can be heated for example by means of an electrical resistance. The heated air is then loaded with the evaporated humidity. Subsequently the humid air is discharged to the outside.

Other types of washer-dryers recirculate process air and condense the water contained in the process air. Herein the humidity in the air can be condensed, turning the air carrying the humidity into dry air that can be recirculated in a closed circuit. Humidity from the humid air is thereby recovered in liquid state. Depending on the condensation process three different types of performing this process can be defined.

A first type utilizes condensation with fresh air. In such known condensing washer-dryers condensation of humid air is carried out by means of an air-air heat exchanger in which one of the exchanging fluids is cold air from the ambient (outside air), which is without direct contact but in thermal contact with the humid air flowing through the heat exchanger. This leads to cooling down the humid air flow and removing its humidity. The refrigeration or cooling air is extracted from the ambient, then heated up and subsequently expelled again to the ambient after flowing through the heat exchanger. The air can be propelled by an additional fan. These washer-dryers have the drawback of the heating they can generate in the ambient of the room in which they are placed when the heated refrigeration air returns to the room. Additionally the condensation is produced by wasting energy from process air. This makes the process little efficient.

A second type utilizes condensation with fresh water. In such known condensing washer-dryers condensation of humid air takes place by cooling with refrigeration or cooling water taken from a water supply. The water can be directly in a counterflow contact with the humid air. These washer-dryers have the drawback related to their refrigeration water consumption. Furthermore, condensation is produced by wasting energy in the process air loop. These washer-dryer are therefore little efficient, too.

A third type utilizes condensation via an air to refrigerant heat pump system. Washer-dryers with air condensation by a heat pump are known, which comprise a heat pump with a compressor, a condenser and an evaporator. In these washer-dryers, the air current applied to the laundry to be dried is heated by means of the heat pump condenser and propelled by a fan. The condensation is effected by cooling the humid air by passing it through the cold surfaces of the heat pump evaporator. The temperature difference between condenser and evaporator is produced due to compressing a refrigerant media in superheated gas state. This refrigerant is able to condense by being cooled down by the dried air. The refrigerant is then expanded and evaporated again by the humid air coming out of the drum of the washer-dryer. These condensing washer-dryers may have the drawback related to the heat pump configuration, particularly the size of it. Depending on the design of the heat pump system, it may turn out that the device is undesirably voluminous or implies a reduction in load capacity of the washer-dryer. This can render it difficult to fit the heat pump system inside the housing or body of the washer-dryer.

It is the object of the present invention to provide an improved household appliance with a heat pump and a corresponding method for operating a household appliance.

This object is solved by a household appliance and by a method having the features of the respective independent claims. Advantageous configurations with convenient further developments of the invention are specified in the dependent claims.

The household appliance according to the invention has a heat pump which comprises a first heat exchanger arrangend within an air duct of the household appliance and a second heat exchanger. The heat pump comprises means for reversing a flow direction of a refrigerant through the heat pump. The household appliance comprises means for supplying water to the second heat exchanger. The second heat exchanger is configured to transfer heat from the refrigerant to the water in a first operation mode of the heat pump, in which the second heat exchanger is operated as a condenser. The second heat exchanger is further configured to transfer heat from the water to the refrigerant in a second operation mode of the heat pump, in which the second heat exchanger is operated as an evaporator. Such a household appliance is highly efficient, and the heat pump is easy to integrate in existing water condensation washer-dryers. However, the household appliance can also be configured as another home appliance combining water heating and drying functions such as a dishwasher.

The household appliance enables a water heating process in the first operation mode of the heat pump in which the second heat exchanger is operated as a condenser. This leads to a low energy consumption and a reduced time during a washing phase or washing period, if the heated water is used within the household appliance.

Further, the water cooled down by means of the second heat exchanger which is operated as an evaporator allows for drying air from a receiving space of the household appliance in which goods to be dried such as laundry in the case of a washer-dryer or dishes in the case of a dishwasher are arranged. This avoids or at least minimizes the waste of water used for the drying process in for example washer-dryers according to the state of the art. Also electric energy consumption can be reduced by recirculating and cooling down the water.

Therefore water heating and drying functions can be performed within the same household appliance by reversing the flow direction of the refrigerant through the heat pump with minimized additional costs compared to state of the art household appliance with a reversible heat pump.

The first heat exchanger of the heat pump is operated as an air-refrigerant heat exchanger and the second heat exchanger is operated as a water-refrigerant heat exchanger. Herein, the water does not need to be pure tap water but can also contain a detergent, a rinse aid or the like, for example if the water is used for washing laundry or washing dishes.

The advantages of the improved household appliance include the thermodynamic efficiency for the drying phase compared to conventional washer-dryers and therefore an appliance energy efficiency improvement. The recirculation of water through a washing chamber of the household appliance implies lower water consumption during washing cycles. The recirculation of water through an air duct of the household appliance implies lower water consumption during drying cycles. As reduced washing times can be achieved, equivalent or improved energy efficiency can be obtained in labeling programs of the household appliance. Furthermore, a better conjoint performance of the washing mode and the drying mode in the same appliance can be achieved with a clear advantage for a user of the household appliance.

Particularly low costs arise from integrating the double function of the water heating and the drying by means of water cooled down by the second heat exchanger. Also the integration can be performed in a particularly simple manner. This is due to the fact that existing condensation concepts of a heat pump can be readily modified and no additional heat exchangers are required to pass from one function or one operation mode to the other function or the other operation mode.

The improved household appliance also allows for a simple assembly process. The heat pump can be integrated as part of an existing water condensation washer-dryer platform or such a household appliance with reduced complexity and low effort for heat pump integration. Also, the household appliance allows for a improved flexibility and adaptability of the design. For example, different drying speeds and efficiencies can be devised, in particular by utilizing different refrigerants. The temperature of the water can be readily regulated by providing appropriate mixing rates between water recirculated through the second heat exchanger and fresh water introduced into the household appliance.

Moreover, specific settings of cooling circuit components and/or conplementary heating devices can be integrated into the household appliance. In addition, the flow and temperature of air entering a washing chamber or tub or drum of the household appliance can be controlled, for example, by opening and closing of valves in the air duct, especially during the heating-up phase.

In particular the second heat exchanger or water/refrigerant heat exchanger does not necessarily need to be integrated inside the machine but an easy integration is possible which leads to a high compactness of the household appliance.

In the first operation mode of the heat pump, i.e. during a washing phase the second heat exchanger or water/refrigerant heat exchanger performs as condenser whereas the air/refrigerant heat exchanger acts as evaporator. On the other hand during the drying mode or drying phase the water/refrigerant heat exchanger acts as evaporator which is cold whereas the air/refrigerant heat exchanger performs as condenser which is hot. This drying mode is the second operation mode of the heat pump.

Preferably, at least one conduit is provided for introducing the water into a washing chamber of the household appliance in the first operation mode. Thus, the water heated by the second heat exchanger operated as condenser can be utilized for washing goods within the washing chamber, for example laundry or dishes. Thus, energy can be saved which would otherwise need to be supplied in order to heat water for the washing process. However, the water heating can be supported by a conventional heating element such as an electrical heater. This enables a faster but less energy efficient washing cycle. Such a faster washing cycle or program can for example be selected by a user of the household appliance.

Preferably, the at least one conduit also allows introducing the water into a further air duct of the household appliance in the second operation mode. Thus, water being cooled down by the second heat exchanger which is operated as evaporator can be utilized to dehumidify the humid air flowing through the further air duct.

Preferably, the household appliance comprises at least one recirculation conduit for conveying water from a washing chamber of the household appliance to the second heat exchanger in the first operation mode. With such a recirculation of water, the water can pass through the second heat exchanger or condenser several times until it reaches the desired temperature or setting temperature.

The recirculation conduit preferably also enables conveying water from a further air duct of the household appliance to the second heat exchanger in the second operation mode. In this case cold water used for cooling down the air in the further air duct (and consequently for reducing the humidity of this air by condensation) is not wasted as in existing water condensation washer-dryers. Rather, the water is recirculated through the heat pump evaporator, i.e. the second heat exchanger which is operated as an evaporator. This cools the water down again, and the process can be repeated. The water recirculation can be achieved by a recirculation pump.

Preferably, the air duct has a first inlet for outside air, and blower means are provided for conveying the outside air towards the first heat exchanger in the first operation mode. By such a configuration of the air duct it can be avoided that air which has been cooled down at the first heat exchanger enters a drum or washing chamber of the household appliance. This leads to an accelerated heating-up of the water in the washing chamber or drum as the heat pump is operated in the first operation mode.

Preferably, the air duct has a second inlet for air coming from a washing chamber of the household appliance. Furthermore, the blower means which are arranged within the air duct can also be utilized for recirculating the air. These blower means are utilized for conveying the outside air towards the first heat exchanger in the first operation mode of the heat pump. Such a configuration enables re-heating the air coming from the washing chamber. For this re-heating the first heat exchanger can be utilized, which is then operated as the condenser of the heat pump.

Preferably, the air duct has a second outlet for recirculating air coming from the washing chamber of the household appliance back into the washing chamber in the second operation mode. Herein, the humid air coming out of the drum or tub or washing chamber is cooled down by the water which has transferred heat to the refrigerant at the second heat exchanger when the heat pump is operated in the second operation mode. The dried air is than heated in the heat pump condenser, i.e. in the first heat exchanger and comes again in contact with the goods inside the drum or tub or washing chamber. Here humidity is taken up from those goods. This process is repeated in a closed loop. Blower means such as a fan wheel can impel the air into the washing chamber and, thus, provide for the recirculation of the air.

Such a configuration allows recirculating air from the washing chamber, which is heated at the first heat exchanger and then reintroduced into the washing chamber. In this case, drying can be achieved by entering dry air into the drum or tub or washing chamber and condensing water from the humid air coming out of the drum or tub after having been in contact with the wet goods such as laundry in the case of a washer-dryer or dishes in the case of a dishwasher. This drying can therefore be performed in a closed loop.

Preferably, at least one valve element for closing and opening at least one of the inlets and/or outlets is provided. By operating such valve elements an inflow of outside air, or of outside air which has been cooled down at the first heat exchanger, into the washing chamber can be avoided during the first operation mode of the heat pump. Also the entry of outside air into the air duct having the first heat exchanger and a discharge of air to the outside from this air duct can be avoided during the drying phase, in which the heat pump is operated in the second operation mode. The at least one valve element therefore enables an improved efficiency of the household appliance in the different operation modes of the heat pump.

Preferably, the household appliance comprises a further air duct connected to a washing chamber of the household appliance. In addition the household appliance preferably comprises means for supplying at least a portion of the water coming from the second heat exchanger into the further air duct. Thus, an end section, at which the further air duct is connected to the washing chamber can also serve as an outlet for heated water coming from the second heat exchanger if the heat pump is operated in the first operation mode. Also, through the further air duct air coming from the washing chamber can be brought in contact with the cold water coming from the second heat exchanger in order to reduce the humidity of the air by condensation. Such an arrangement allows for a very efficient operation of the household appliance.

A direct heat transfer can be provided by introducing a cold water stream or cold water drops into the further air duct. The water stream can in particular be in the form of a spray. Such a direct heat transfer and therefore a direct water condensation can be realized particularly easily, as no pipes or the like need to be arranged within the further air duct to guide the cold water through the further air duct. Therefore also a pressure drop for air flowing through the further air duct in counterflow to the cold water stream is particularly low.

However, also an indirect water condensation can be provided. Herein a third heat exchanger is arranged within the further air duct. This third heat exchanger is configured to transfer heat from air flowing through the further air duct to the water coming from the second heat exchanger and flowing through the third heat exchanger. In this case, the humid air condensates on the cold surface of the third heat exchanger and is thus dehumidified. Herein, an indirect contact of the humid air with the cold water is achieved through the water-air heat exchanger, i.e. the third heat exchanger.

This leads to a particular good dehumidification of the air coming from the washing chamber as there is no direct contact between this air and the cold water coming from the second heat exchanger in the second operation mode of the heat pump.

The third heat exchanger can in particular have an outlet for introducing at least a portion of the water into the further air duct and from there further into the washing chamber. Through the outlet the water can also be introduced directly into the washing chamber. This allows for a convenient recirculation of the water through the washing chamber in cases where the second heat exchanger is operated as condenser.

Preferably, the household appliance comprises means for varying an expansion of the refrigerant, in particular dependent on the operation mode of the heat pump. This is due to the finding that the refrigerant may preferably require a variable expansion as it comes from the high pressure component (condenser) of the heat pump to the low pressure component (evaporator). With such an expansion device varying boundary conditions can be taken into account such as differences in the ambient temperature and therefore in the outside air.

Also, changing conditions during the operation of the household appliance can be taken into account. For example in a drying process the temperature of the air entering the evaporator increases with the time from for example around 23 °C to (in steady state) about 40 °C. Also, the variation of the ambient temperature depending on the hour of the day can be taken into account by utilizing means for varying the expansion of the refrigerant.

To achieve this variable expansion a bidirectional electronic expansion valve can be utilized or a thermostatic expansion valve. Such valve types may also enable a variable expansion along either the washing cycle or the drying cycle. Alternatively, a double capillary system with a check valve can be used to provide different expansion settings between a washing and heating mode and a drying and cooling mode, respectively. Also a switchable multi-capillary system can be utilized as described in WO 2011/072999 A2 which is incorporated herein by reference in its entirety.

The second heat exchanger or water/refrigerant heat exchanger can be at least partially arranged within a water storage device of the household appliance. In other words, the second heat exchanger can be immersed in water. This is particularly simple. The corresponding storage device can be a water tank that is part of the tub or washing chamber or which can be integrated into an air duct connected to the washing chamber. Herein a finned tube heat exchanger or a fin and tube heat exchanger can be utilized. In this case the refrigerant is the primary fluid while water is the secondary fluid. Aluminum or steel are preferred materials for the second heat exchanger to avoid the formation of copper oxides. Additionally, the heat exchanger can have just tubes and no fins and be, for example, formed as a pipe coil. Furthermore, metal tubes directly joined, for example through welding or gluing, to a supporting metal plate can be utilized. This supporting metal plate can be made of copper, aluminum or stainless steel for example. Furthermore, a stamped metal plate heat exchanger may be utilized. Such heat exchangers provide particularly good results when utilized as immersed heat exchangers.

In another advantageous embodiment the second heat exchanger can be at least partially arranged in a conduit through which the water flows in at least one of the operation modes of the heat pump. In other words a counterflow or cross flow heat exchanger can be utilized in which the refrigerant and the water are exchanging heat through a conductive surface while there is a relative counterflow or cross flow movement between these fluids. Such a heat exchanger allows for a very efficient heat transfer. For example plate heat exchangers or tube in tube heat exchangers can be utilized in this configuration.

The first heat exchanger or air/refrigerant heat exchanger can also be a finned tube heat exchanger or a fin and tube heat exchanger, wherein the pipes and/or the fins can be made of copper or aluminum for example. Also, a so-called microchannel heat exchanger can be utilized in which at least one fluid flows in lateral confinements or channels with typical dimensions of the hydraulic diameter below one millimeter. Such microchannel heat exchangers can be made from metal, ceramic and/or low cost plastic material.

In all these configurations of the first heat exchanger the refrigerant is the primary fluid, while the air is the secondary fluid. This first heat exchanger can be fit into the air duct or air channel simply by mechanical pressure, or by means of screws, rivets or the like. Also, a snap-fit fixation of the first heat exchanger within the air duct can be realized as well as gluing the first heat exchanger into the air duct by means of an adhesive.

Preferably, the household appliance comprises at least one reservoir for storing rinsing water utilized at an end of a washing cycle of the household appliance. Alternatively or additionally, the reservoir can be configured to store water resulting from vapor condensation during a drying cycle of the household appliance. Thus, a reutilization of water can be performed.

As the water in this reservoir has at minimum the tap water temperature, or even a higher temperature due to having been in contact with washed goods, the water can be reused for a next washing or drying process by recirculating the water. This helps to further reduce water consumption and improves the efficiency of the processes due to a higher temperature as a starting point. In the same way water extracted from goods in the drum or washing chamber in the form of condensed water can be reutilized in further washing cycles or drying cycles by recirculating the water.

Even if the water in the reservoir has only tap water temperature, by storing this water in the reservoir the water collects energy from the ambient or environment. This allows subsequent washing and drying cycles to start at a higher water temperature level. This reverts in further water saving and additional energy efficiency. Such a reservoir may be an additional device inside the household appliance. Alternatively or additionally, the reservoir can be integrated in a bottom part of an air duct or air channel where the rinse water of a direct water condensation process and/or the water resulting from the condensation of vapor is collected.

In the case of a washer-dryer this reservoir should have a maximum water level which avoids wetting of laundry within the drum or washing chamber of the household appliance.

The reservoir preferably has a connection to the second heat exchanger. This allows for a reutilization of the water stored in the reservoir during a subsequent washing process or drying process.

Finally it has proven advantageous if the household appliance comprises means for preventing an accumulation of dirt and/or lints at at least one of the heat exchangers. For example the water refrigerant heat exchanger, i.e. the second heat exchanger may be sensitive to clogs produced by lint or dirtiness coming from the laundry accumulation or from the washed dishes. In the case of a direct water condensation such lints would be caught by the sprayed water and therefore introduced into the water refrigerant heat exchanger, i.e. arrive at a secondary surface of the water refrigerant heat exchanger. In the case of indirect water condensation such lints would additionally accumulate on the secondary surface (such as fins) of the water air heat exchanger or third heat exchanger.

Also the refrigerant air heat exchanger, i.e. the first heat exchanger which acts as condenser during the drying cycle and as evaporator during the washing cycle may be sensitive to surface clogging, in particular if the surface of the heat exchanger has fins or the like. This clogging can be due to the presence of lint in the drying cycle or due to dust in ambient air during the washing cycle.

The means for preventing an accumulation of dirt and/or lints and/or for removing such dirt or lints can for example comprise cleaning procedures and/or filtering procedures. For example, a particle filter can be arranged at the entrance of a water recirculation pump. This filter can be accessible for a user of the household appliance and therefore be emptied from time to time. Alternatively or additionally, water can be circulated in the opposite direction by a reversible pump. This can, for example, be performed just before water is exhausted towards the outside by a drain pump. Furthermore, rinse water can be utilized to wash the fins of the water air heats exchanger one or several times per drying cycle. Such rinse water can in particular be provided by a system which is also appropriate for performing a direct water condensation in the further air duct.

Finally a lint air filter can be arranged at the entrance of the water refrigerant system, and this lint air filter can be accessible for the user of the household appliance. With respect to the refrigerant air heat exchanger or first heat exchanger, a filtering or cleaning solution can be utilized to ensure proper performance during lifetime.

In the method according to the invention for operating a household appliance with a heat pump comprising a first heat exchanger arranged within an air duct of the household appliance and a second heat exchanger, wherein the heat pump comprises means for reversing a flow direction of a refrigerant through the heat pump, in a first operation mode of the heat pump water is supplied to the second heat exchanger. In this first operation mode of the heat pump the second heat exchanger is operated as a condenser and heat is transferred from the refrigerant to the water. In a second operation of the heat pump water is supplied to the second heat exchanger which is operated as an evaporator, and heat is transferred from the water to the refrigerant. The advantages and preferred embodiments described with respect to the household appliance according to the invention correspondingly apply to the method according to the invention.

The features and feature combinations mentioned above in the description as well as the features and feature combinations mentioned below in the description of figures and/or shown in the figures alone are usable not only in the respectively specified combination, but also in other combinations or alone, without departing from the scope of the invention. Thus, implementations are also to be considered as encompassed and disclosed by the invention, which are not explicitly shown in the figures or explained, but arise from and can be generated by separated feature combinations from the explained implementations.
Therefore also embodiments and feature combinations shall be considered as disclosed, which do not have all the features of an originally drafted independent claim.

Further advantages, features and details of the invention are apparent from the claims, the following description of preferred embodiments as well as based on the drawings in which features having analogous functions are designated with the same reference signs. Therein show:
- Fig. 1: schematically a washer-dryer with a reversible heat pump, wherein the washer-dryer performs a washing process in which the water utilized for washing is heated up by a heat exchanger of the heat pump operated as condenser;
- Fig. 2: the washer-dryer according to Fig. 1 during a drying process in which the heat exchanger of the heat pump is utilized as evaporator and another heat exchanger of the heat pump is utilized as condenser;
- Fig. 3: a variant of the washer-dryer during the washing process, wherein a further heat exchanger is arranged within an air duct for recirculating air into a drum of the washer-dryer during a drying process;
- Fig. 4: the washer-dryer according to Fig. 3 during the drying process;
- Fig. 5: the heat pump with a four-way-reversing valve in a switch position utilized during the washing process;
- Fig. 6: the heat pump according to Fig. 5 with the four-way-reversing valve in a switch position utilized during the drying process;
- Fig. 7: an example of an expansion device of the heat pump which allows for different expansions depending on the flow direction of the refrigerant through the expansion device; and
- Fig. 8: the expansion device according to Fig. 7, wherein the flow direction of the refrigerant through the expansion device is reversed with respect to the flow direction shown in Fig. 7.

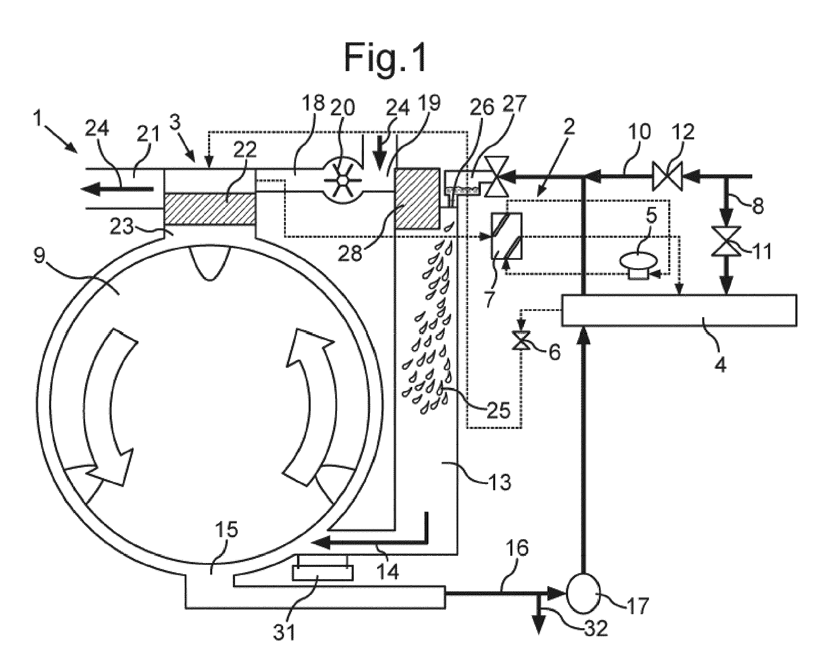

Fig. 1 schematically shows a household appliance 1 which is in the illustrated embodiment configured as a washer-dryer. The household appliance 1 can equally be configured as a dishwasher or another home appliance which combines water heating and drying functions.

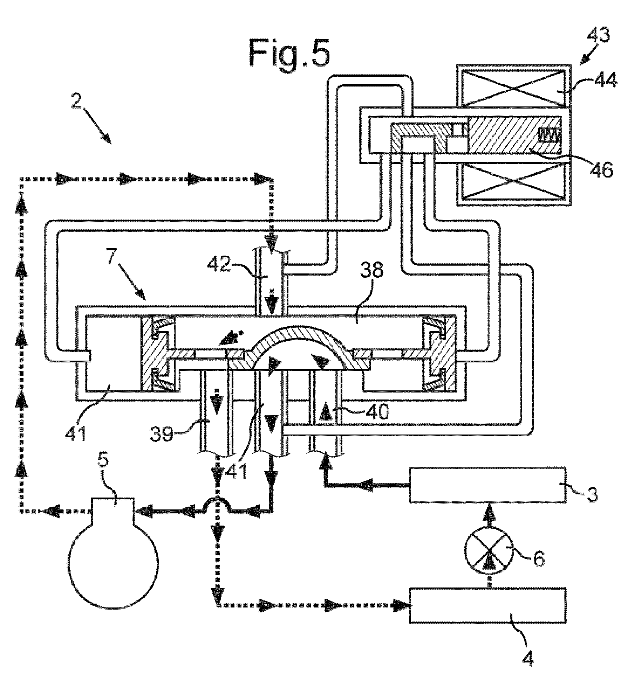

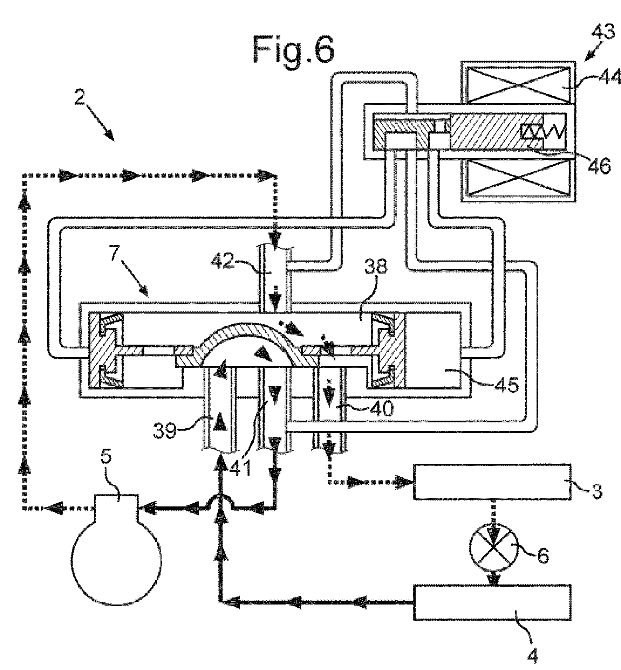

The household appliance 1 comprises a heat pump 2, which is in greater detail shown in Fig. 5 and Fig. 6. The heat pump 2 is configured as a reversible heat pump 2. The heat pump 2 comprises in a manner known per se a first heat exchanger 3, a second heat exchanger 4, a compressor 5 and an expansion device 6. Means for reversing a flow direction of a refrigerant through the heat pump 2 can comprise a valve 7, which is exemplarily shown as a four-way reversing valve in greater detail in Fig. 5 and Fig. 6.

In Fig. 1 the valve 7 is shown in a switch position, in which the refrigerant which has been compressed by the compressor 5 first flows through the second heat exchanger 4 which is accordingly operated as a condenser. The refrigerant which has been cooled down in the second heat exchanger 4 is then expanded at the expansion device 6 and flows to the first heat exchanger 3 which is accordingly operated as evaporator.

During the washing process shown in Fig. 1 the second heat exchanger 4, which is a water/refrigerant heat exchanger, is utilized to heat up water such as tap water provided to the second heat exchanger 4 through a supply pipe 8. Water from water mains can also be supplied to a drum 9 or such a washing chamber of the household appliance 1 through another supply pipe 10, from which the supply pipe 8 branches off. Both supply pipes 8, 10 can have valves 11, 12 which allow to regulate a water inflow through the supply pipe 10 into the drum 9 or through the supply pipe 8 and further via the second heat exchanger 4 into the drum 9.

The water heated up by the second heat exchanger 4 reaches the drum 9 through an air duct 13 connected to the drum 9. A corresponding flow direction of the water which has been heated up by the heat exchanger 4 from the air duct 13 into the drum 9 is illustrated in Fig. 1 by an arrow 14. The drum 9 or washing chamber has an outlet 15 at a bottom part, through which water can be recirculated towards the second heat exchanger 4. To achieve this, a recirculation conduit 16 is provided which connects the outlet 15 with the second heat exchanger 4. A pump 17 in the recirculation conduit 16 conveys the water from the drum 9 to the second heat exchanger 4. By recirculating the water into the tub or drum 9 the water takes up more and more heat in the heat exchanger 4 until it reaches the desired setting temperature.

The first heat exchanger 3 of the heat pump 2 which is configured as an air/refrigerant heat exchanger is arranged in another air duct 18 of the household appliance 1. This air refrigerant heat exchanger or first heat exchanger 3 can be located at any position inside the machine. For example it can be arranged on the top, on the rear, on the bottom or attached to the drum 9.

Ambient air is passed through the air duct 18 in the first operation mode of the heat pump 2, which is illustrated in Fig. 1. This ambient air is cooled down at the first heat exchanger 3 which is operated as an evaporator. The ambient air enters the air duct 18 through a first inlet 19 and is propelled towards the first heat exchanger 3 by a blower means, for example by a fan 20. The air duct 18 has a first outlet 21 through which the cooled down ambient air is discharged into the environment.

In Fig. 1 a valve 22 is schematically shown in a position in which the outlet 21 is opened and a second outlet 23 of the air duct 18 is closed. Through this second outlet 23 air from the air duct 18 can be introduced into the drum 9. However, this shall be avoided during the washing process illustrated in Fig. 1, in which heated up water coming from the second heat exchanger 4 is utilized in the drum 9. The flow direction of the ambient air through the first inlet 19 and out of the first outlet 21 is illustrated in Fig. 1 by further arrows 24.

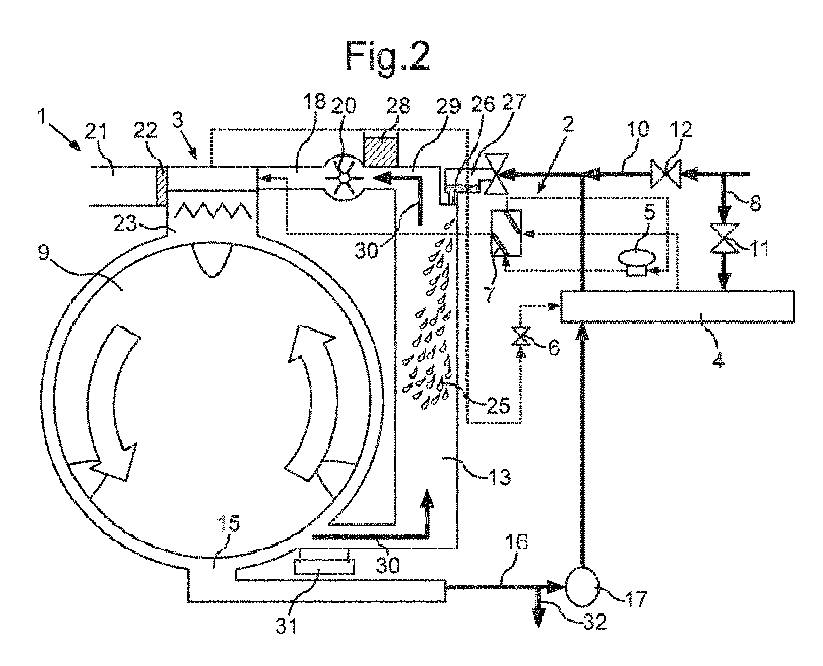

As schematically shown in Fig. 1, the water coming from the second heat exchanger 4 is preferably introduced into the air duct 13 in the form of a spray 25, i.e. in the form of water streams or droplets falling downward through the air duct 13. This spray 25 is utilized when the household appliance 1 is operating in a drying process illustrated in Fig. 2. Here the valve 7 of the heat pump 2 is switched into a second position, in which the refrigerant compressed by the compressor 5 first flows through the first heat exchanger 3. In this operation mode of the heat pump 2 the first heat exchanger 3 therefore is operated as a condenser. The refrigerant then is expanded at the expansion device 6 and flows through the second heat exchanger 4 which in this configuration is operated as evaporator. Therefore, the water initially provided through the supply pipe 8 and flowing through the second heat exchanger 4 is cooled down. This cooled down water enters the air duct 13 through an inlet 26 which can be an outlet of a reservoir 27. Water can be supplied to the reservoir 27 through the supply pipe 10 and from the second heat exchanger 4. From the inlet 26 the water flows through the air duct 13 in the form of the spray 25.

The valve 22 located in the vicinity of the first heat exchanger 3 in the air duct 18 is shown switched into a position in which it closes the first outlet 21 of the air duct 18 but opens the second outlet 23 of the air duct 18. Therefore, air can be recirculated through the drum 9. In the air duct 18 another valve 28 is arranged. In Fig. 2 this valve 28 is shown in a position, in which it closes the first inlet 19 of the air duct 18, i.e. the inlet 19 for the ambient air.

However, the air duct 18 has another inlet 29 through which a communication between the air duct 18 and the further air duct 13 can be established. During the drying process illustrated in Fig. 2 the air which has been heated up by the first heat exchanger 3 and introduced into the drum 9, leaves the drum 9 in a humid, hot condition. This hot, humid air is then blown in counterflow to the spray 25 through the further air duct 13. Due to the contact of the hot, humid air with the cold spray 25 condensation of vapor occurs and the humid air from the drum 9 is dehumidified. A flow direction of the air which is recirculated through the drum 9 via the air ducts 13, 18 is illustrated in Fig. 2 by further arrows 30. The valve 28 is shown in Fig. 1 in a position, in which an inflow of ambient air entering the air duct 18 through the first inlet 19 into the further air duct 13 is prevented.

The household appliance 1 preferably comprises a further reservoir 31 through which rinsing water at the end of a washing cycle or water from the condensation of vapor within the further air duct 13 can be collected. Water from this reservoir 31 can then be reutilized for recirculating it through the second heat exchanger 4 and the drum 9. The household appliance 1 can further comprise a purge 32 for evacuating water which shall not be recirculated towards the second heat exchanger 4. In the household appliance shown the purge 32 branches off from the recirculation conduit 16 upstream of the pump 17.

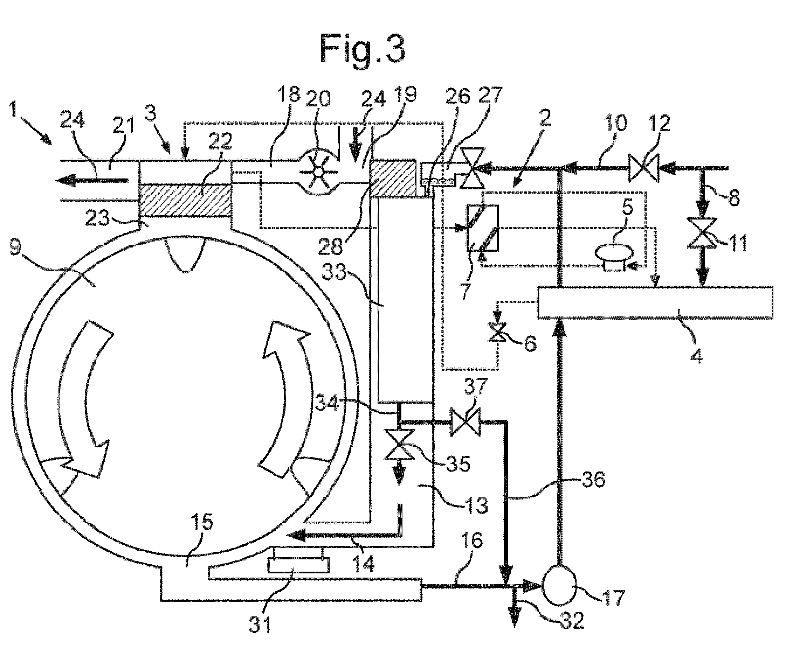

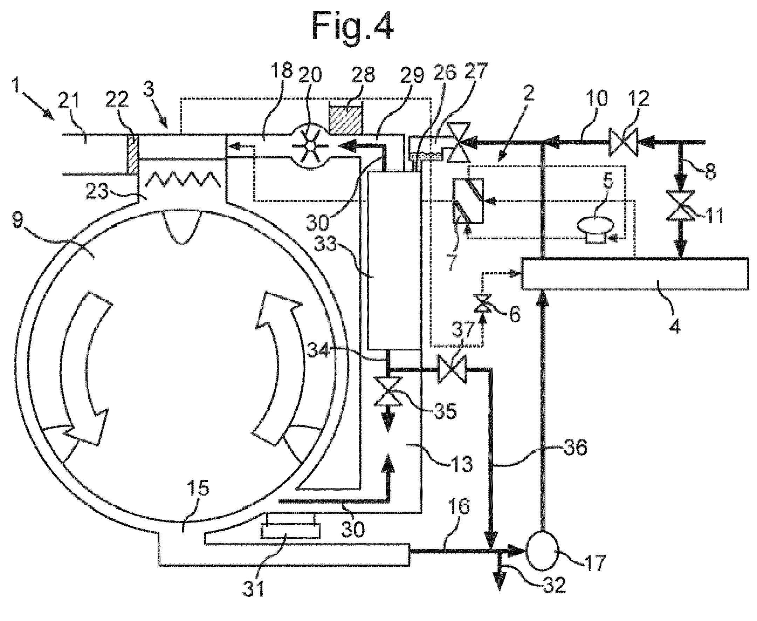

Fig. 3 and Fig. 4 show a variant of the household appliance 1 in which not a direct water condensation is realized by means of the spray 25. Rather a third heat exchanger 33 is arranged within the further air duct 13.

During the washing process illustrated in Fig. 3 hot water flowing through this third heat exchanger 33 can be introduced into the drum 9 via the air duct 13 by means of an outlet pipe 34 which preferably has a valve 35. From this outlet pipe 34 a second pipe 36 which preferably also has a valve 37 enables to recirculate the water into the recirculation conduit 16. The second pipe 36 is connected to the recirculation conduit 16, for example upstream of the pump 17, but without passing through the drum 9.

In the household appliance 1 shown in Fig. 3 an indirect water condensation process can be realized. This is illustrated in Fig. 4 which shows the drying process of the household appliance 1. Here the second heat exchanger 4 is again operated as evaporator in order to cool down the water which is recirculated through the third heat exchanger 33. The hot air which is heated up at the first heat exchanger 3 which is operated as the condenser of the heat pump 2 enters the drum 9 through the second outlet 23 of the air duct 18. The first outlet 21 is closed by the valve 22. Also, the first inlet 19 of the duct 18 is closed by the valve 28. The humid air coming from the drum 9, which is illustrated in Fig, 4 by the arrow 30, is then passed through the further air duct 13. In the further air duct 13 the humidity of the air having passed through the drum 9 is reduced by condensation resulting from the contact of the humid air with the third heat exchanger 33.

Preferably, the air/water heat exchanger or third heat exchanger 33 is designed in a way which takes into account the temperature differential between the air and the water and the flow of water through this heat exchanger 33. Also the water refrigerant heat exchanger or second heat exchanger 4 should be designed in a way to provide sufficient cool water to allow for an efficient condensation of water from the hot, humid air leaving the drum 9.

In the case of the direct water condensation shown in Fig. 2 the air pressure drop is lower than in the household appliance 1 shown in Fig. 4 in which the third heat exchanger 33 is arranged within the air duct 13.

Due to the valves 11, 12 provided in the supply pipes 8, 10 the temperature of the water used in the processes may be regulated by providing appropriate mixing rates between the water from the water mains and the recirculated water. Furthermore, the flow of air entering the drum 9 and its temperature can be regulated. This is especially interesting in the heating phase. In some phases of the drying process an increase of the air flow for example by modifying the speed of the fan 20 also leads to a modification of the temperature of the air which enters the drum 9. Further the valves 22, 28 allow to exhaust the air from the appliance 1 on demand.

With reference to Fig. 5 and Fig. 6 the operation of the heat pump 2 in the different operation modes shall be illustrated. In Fig. 5 the valve 7 is shown as a four-way-reversing valve. A piston 38 or valve element of the valve 7 is shown in Fig. 5 moved into a position in which the compressed refrigerant coming from the compressor 5 exits the valve 7 at a port 39 and flows further to the second heat exchanger 4. From the second heat exchanger 4 which then is operated as the condenser the refrigerant flows through the expansion device 6 and further to the first heat exchanger 3 which is then operated as the evaporator. The cooled down refrigerant then enters the valve 7 through another port 40 and leaves the valve 7 through a further port 41. From here the refrigerant flows to the compressor 5 and is again introduced into the valve 7 via a fourth port 42.

The position of the piston 38 which effects the blocking and opening or the fluid communication between the different ports 39, 40, 31, 42 can be regulated by means of a pilot valve 43 having a coil 44. The pilot valve 43 can in particular be a solenoid valve. The coil 44 of the pilot valve 43 is shown in an energized state in Fig. 5. Consequently, a fluid 45 pushes the piston 38 of the valve 7 into the position in which the ports 40, 41 communicate with each other and the ports 42, 39 also communicate with each other.

In the operation mode of the heat pump 2 illustrated in Fig. 6 the pilot valve 43 is shown in a status in which the coil 44 is not energized. Consequently, a valve element 46 of the pilot valve 43 is moved into a position which leads to an inflow of the fluid 45 into the valve 7, which moves the piston 38 in the opposite direction. The valve element 46 closes or opens respective ports for the fluid 45, which are provided at the pilot valve 43.

In this operation mode of the heat pump 2 the refrigerant which has been compressed by the compressor 5 first enters the valve 7 through the port 42 and leaves the valve 7 through the port 40. From here the refrigerant flows to the first heat exchanger 3 which is then operated as the condenser. After passing through the expansion device 6 the refrigerant is further transported to the second heat exchanger 4 which then is operated as the evaporator. From here the refrigerant flows into the valve 7 through the port 39 and leaves the valve 7 through the port 41. From the port 41 the refrigerant returns to the compressor 5.

Instead of the four-way-valve exemplarily shown in Fig. 5 and Fig. 6 a similar device comprising a circuit of pipes and valves can be utilized. However, the four-way-valve is particularly compact. Nevertheless, other devices can be utilized to operate the heat pump 2 in a reversible operation mode.

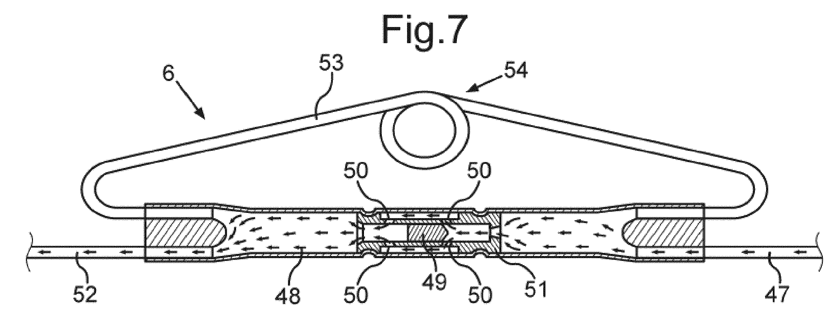

Fig. 7 shows an exemplary configuration of the expansion device 6 as a double capillary system with a check valve. This expansion device 6 allows for a variable expansion depending on the flow direction of the refrigerant through the expansion device 6.

The expansion device 6 has a first port 47 which forms an inlet if the refrigerant flows through the expansion device 6 in a first direction indicated by arrows 48 in Fig. 7. Herein the refrigerant pushes a piston 49 into a position, in which the refrigerant can flow through openings 50 in a casing 51, in which the piston 49 is arranged. The refrigerant leaves the expansion device 6 through another port 52.

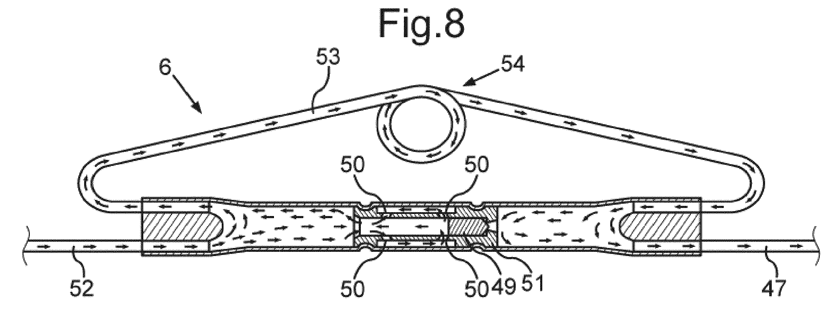

If the refrigerant enters the expansion device 6 through this other port 52 (see Fig. 8) the refrigerant pushes the piston 49 in a position within the casing 51 in which the piston 49 blocks any flow of the refrigerant through the casing 51 directly towards the other port 47. In this situation the refrigerant flows through a bypass 53 having a ring pipe section 54. This bypass 53 connects the ports 52, 47 with each other. As the diameter of the bypass 53 is larger than the diameter of the openings 50 in the casing 51, different expansions of the refrigerant are achieved dependent on the flow direction of the refrigerant through the expansion device 6.

For example, the expansion device 6 can be utilized in a cooling mode in which the refrigerant flows from the port 47 to the port 52 (see Fig. 7) and in a heating mode in which the refrigerant flows from the port 52 to the port 47 (see Fig. 8).

Alternatively other bidirectional expansion valves which enable in particular a variable expansion can be utilized as the expansion device 6, for example a bidirectional electronic expansion valve or a thermostatic expansion valve.

The piping system or pipes connecting the components of the heat pump 2 can for example be made of bended copper pipes. Other possibilities comprise flexible hoses made of stainless steel or thermo-stable polymers or a combination of such pipes.

The connection between the components of the heat pump 2 such as the compressor 5, the first heat exchanger 3, the second heat exchanger 4 and the pipes of the heat pump 2 can preferably be done hermetically by brazing, soldering or eutectic processes. Herein eutectic bonding can be utilized. The connection can also be done by the utilization of mechanical non reversible hermetical pressure mechanisms such as connections comprising two rings and a connecting piece which are commercially available as Lokring® connections. Other mechanical connection solutions which are also possible but not preferred comprise mechanical connections which are preferably hermetical and non-reversible with or without any thermal shock. Finally these connections can de accomplished by screwing.

Preferably, during the drying process shown in Fig. 2 and Fig. 4 the heat exchanger 3 of the heat pump 2 which performs as condenser is utilized to heat the recirculated air. However, alternatively or complementary, other heating means can be utilized for example in the form of an electrical heating resistance or a heating light directed into the drum 9. The heating light can be an infrared heating lamp. In a like manner during the washing phase the heat exchanger 4 of the heat pump 2 which performs as condenser is used to heat the water. Here again, alternatively or complementary another heating means can be utilized, for example an electrical heating resistance immersed in the tub or drum 9.

In areas of higher temperature or with higher heat flows such as the areas near the heat exchangers 3, 4, 33 isolation material can be provided. Such an isolation material may be added in order to decrease heat losses towards the environment from the device or duct. Appropriate isolation materials or materials with a low coefficient of thermal conductivity, for example plastic foams, can be glued, riveted, screwed or snap-fitted to the desired surface. For example the water refrigerant heat exchanger or second heat exchanger 4 can be insulated to avoid thermal losses and/or condensation inside the washer/dryer cabinet.

With respect to the second heat exchanger 4 or water refrigerant heat exchanger an immersion of the heat exchanger 4 in water inside a water tank can be realized. This allows for a particularly easy construction. Alternatively the second heat exchanger 4 can be a counterflow or cross flow heat exchanger 4 which provides for a particularly good heat transfer rate and a high efficiency.

The drying speeds when operating the household appliance 1 as described with reference to Fig. 2 and Fig. 4 can vary depending on the refrigerant utilized. For the same heat pump the refrigerant R134a leads to a slower drying than other refrigerants such as R290 or R407C. Therefore, by choosing the appropriate refrigerant different drying speeds can be realized with the reversible heat pump 2.

### LIST OF REFERENCE SIGNS

- 1: household appliance
- 2: heat pump
- 3: first heat exchanger
- 4: second heat exchanger
- 5: compressor
- 6: expansion device
- 7: valve
- 8: supply pipe
- 9: drum
- 10: supply pipe
- 11: valve
- 12: valve
- 13: air duct
- 14: arrow
- 15: outlet
- 16: recirculation conduit
- 17: pump
- 18: air duct
- 19: inlet
- 20: fan
- 21: outlet
- 22: valve
- 23: outlet
- 24: arrow
- 25: spray
- 26: inlet
- 27: reservoir
- 28: valve
- 29: inlet
- 30: arrow
- 31: reservoir
- 32: purge
- 33: heat exchanger
- 34: outlet pipe
- 35: valve
- 36: pipe
- 37: valve
- 38: piston
- 39: port
- 40: port
- 41: port
- 42: port
- 43: pilot valve
- 44: coil
- 45: fluid
- 46: valve element
- 47: port
- 48: arrow
- 49: piston
- 50: opening
- 51: casing
- 52: port
- 53: bypass
- 54: ring pipe section

## Claims

1. Household appliance with a heat pump (2) comprising a first heat exchanger (3) arranged within an air duct (18) of the household appliance (1) and a second heat exchanger (4), wherein the heat pump (2) comprises means (7) for reversing a flow direction of a refrigerant through the heat pump (2), **characterized in that** the household appliance (1) comprises means for supplying water to the second heat exchanger (4) which is configured to transfer heat from the refrigerant to the water in a first operation mode of the heat pump (2), in which the second heat exchanger (4) is operated as a condenser and to transfer heat from the water to the refrigerant in a second operation mode of the heat pump (2), in which the second heat exchanger (4) is operated as an evaporator.

2. Household appliance according to claim 1, **characterized in that** at least one conduit is provided for introducing the water into a washing chamber (9) of the household appliance (1) in the first operation mode and/or for introducing the water into a further air duct (13) of the household appliance (1) in the second operation mode.

3. Household appliance according to claim 1 or 2, **characterized by** at least one recirculation conduit (16, 36) for conveying water from a washing chamber (9) of the household appliance (1) to the second heat exchanger (4) in the first operation mode and/or for conveying water from a further air (13) duct of the household appliance (1) to the second heat exchanger (4) in the second operation mode.

4. Household appliance according to any one of claims 1 to 3, **characterized in that** the air duct (18) has a first inlet for (19) outside air, and blower means (20) are provided for conveying the outside air towards the first heat exchanger (3) in the first operation mode.

5. Household appliance according to any one of claims 1 to 4, **characterized in that** the air duct (18) has a first outlet (21) for discharging air into the surroundings of the household appliance (1) in the first operation mode.

6. Household appliance according to any one of claims 1 to 5, **characterized in that** the air duct (18) has a second inlet (29) for air coming from a washing chamber (9) of the household appliance (1), and blower means (20) are provided for conveying the air towards the first heat exchanger (3) in the second operation mode.

7. Household appliance according to any one of claims 1 to 6, **characterized in that** the air duct (18) has a second outlet (23) for recirculating air coming from a washing chamber (9) of the household appliance back into the washing chamber (9) in the second operation mode.

8. Household appliance according to any one of claims 4 to 7, **characterized by** at least one valve element (22, 28) for closing and opening at least one of the inlets (19, 29) and/or outlets (21,23).

9. Household appliance according to any one of claims 1 to 8, **characterized by** a further air duct (13) connected to a washing chamber (9) of the household appliance (1) and means (26, 27) for supplying at least a portion of the water coming from the second heat exchanger (4) into the further air duct (13).

10. Household appliance according to claim 9, **characterized by** a third heat exchanger (33), in particular having an outlet (34) for introducing at least a portion of the water into the further air duct (13), configured to transfer heat from air flowing through the further air duct (13) to the water coming from the second heat exchanger (4).

11. Household appliance according to any one of claims 1 to 10, **characterized by** means (6) for varying an expansion of the refrigerant, in particular dependant on the operation mode of the heat pump (2).

12. Household appliance according to any one of claims 1 to 11, **characterized in that** the second heat exchanger (4) is at least partially arranged within a water storage device of the household appliance (1) and/or in a conduit through which the water flows in at least one of the operation modes of the heat pump (2).

13. Household appliance according to any one of claims 1 to 12, **characterized by** at least one reservoir (31), in particular having a connection to the second heat exchanger (4), for storing rinsing water utilized at an end of a washing cycle of the household appliance (1) and/or water resulting from vapor condensation during a drying cycle of the household appliance (1).

14. Household appliance according to any one of claims 1 to 13, **characterized in that** the household appliance (1), in particular configured as a washer-dryer or a dishwasher, comprises means for preventing an accumulation of dirt and/or lints at at least one of the heat exchangers (3, 4, 33).

15. Method for operating a household appliance (1) with a heat pump (2) comprising a first heat exchanger (3) arranged within an air duct (18) of the household appliance (1) and a second heat exchanger (4), wherein the heat pump (2) comprises means for reversing a flow direction of a refrigerant through the heat pump (2), **characterized in that** in a first operation mode of the heat pump (2) water is supplied to the second heat exchanger (4) which is operated as a condenser, and heat is transferred from the refrigerant to the water and in a second operation mode of the heat pump (2) water is supplied to the second heat exchanger (4) which is operated as an evaporator, and heat is transferred from the water to the refrigerant.
